# EUROPEAN PATENT APPLICATION

(11) **EP 4 793 867 A1**
(43) Date of publication of application: **19.08.2026**
(21) Application number: 25157546.0
(22) Date of filing: 13.02.2025
(51) Int. Cl.: G06Q 40/04

(54) **METHOD, APPARATUS AND COMPUTER PROGRAM FOR TRADING TOKENIZED ASSETS**

(71) Applicant: MDMY Pty Ltd, 2030 Dover Heights NSW (AU)
(72) Inventor: Kovalenko, Svetlana, Dover Heights, 2030 (AU)
(74) Representative: Best, Bastian

(57) **Abstract**

Disclosed are methods for trading tokenized assets as well as a corresponding data structure, a data processing apparatus and a computer program. One of the methods comprises providing a set of smart contracts stored on a blockchain, wherein the set of smart contracts forms a decentralized order book configured to record token trading orders, receiving a request from a user device to add a token trading order to the decentralized order book, determining a reward for executing the token trading order, collecting a payment of the reward from the user device, making the token trading order available for execution, determining that the token trading order was executed by an executor device and making the reward available to the executor device

## Description

### TECHNICAL FIELD

The present disclosure generally relates to the field of decentralized computation, and more particularly to techniques for trading tokenized assets. Certain embodiments may provide for a scalable smart contract implementation on a blockchain.

### BACKGROUND

Asset tokenization is a growing trend but is currently limited by the lack of infrastructure (e.g., platforms) to support the trading of tokenized assets.

Current solutions for decentralized exchanges include trading/liquidity pool models such as UniSwap or SushiSwap which use a formula to determine a price of a tokenized asset. A disadvantage of these approaches is that they do not allow for a real price discovery/negotiation of the tokenized assets. Instead, the only way to move a price according to these approaches is to perform the trade of the tokenized asset according to the formula-based determined price.

Other solutions for decentralized exchanges rely on using Layer 2 (L2) networks, such as dYdX or IDEX. These networks are built on top of a blockchain (i.e., the first layer (L1)) to improve/enhance its performance/functionality. However, reliance on L2 networks unnecessarily complicates the entire system architecture and also makes it less reliable. This is because by relying on L2 networks, the tokenized assets are exposed to multiple points of failure including not only the L1 infrastructure itself, but also the L2 infrastructure, the L1-L2 bridge logic as well as the smart contract semantics required for the trading. This makes it less likely that decentralized exchange platforms will be adopted by customers, as they may be deterred by the perceived risks and complexity.

It is therefore an objective of the present disclosure to provide techniques for efficiently trading tokenized assets, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

As a general overview, certain aspects of the present disclosure provide methods for trading tokenized assets based on a decentralized order book, which do not rely on a central authority. In certain aspects, the decentralized order book is configured to support a shared execution cost semantic. In certain aspects, the decentralized order book is configured to support a partial execution semantic. In certain aspects, the decentralized order book is configured to support a shared execution cost semantic and a partial execution semantic. Certain aspects separate fee allocation from inherent computational complexity.

As will be explained in the following, certain aspects disclosed herein relate to a blockchain with smart contracts. However, it should be appreciated that the disclosed concepts may also be natively supported by future blockchains, so that the disclosed smart contract implementation is to be understood merely as one possibility.

This way, a novel solution for implementing complex logic such as decentralized token exchange on a blockchain, while separating cost/reward allocation from inherent computational complexity is provided. As a result, systems implementing aspects of the present disclosure can benefit from the following technical advantages:
1. Efficient usage of computational resources.
2. Constant and bounded transactions costs.
3. Incentivization of participants to make efficient use of computation resources by implementing partial execution and shared responsibility mechanisms.
4. Improved system security by decentralizing/distribution data storage and transaction processing across multiple nodes/participants.
5. Enhanced fault tolerance through node redundancy.
6. Trustless Transactions between parties without requiring mutual trust or intermediaries (e.g., a central authority).
7. Improved scalability (e.g., improve scalability by adding processing nodes) as well as traceability and transparency of transactions (e.g., a complete and verifiable history of all transactions stored on the blockchain allows to ensure data integrity).

One aspect of the present disclosure relates to a method for trading tokenized assets. The method may be computer-implemented. The method may comprise providing a set of smart contracts stored on a blockchain. The set of smart contracts may form a decentralized order book configured to record token trading orders. The method may comprise receiving a request from a user device to add a token trading order to the decentralized order book. The method may comprise determining a reward for executing the token trading order. The method may comprise collecting a payment of the reward from the user device. The method may comprise making the token trading order available for execution. The method may comprise determining that the token trading order was executed by an executor device. The method may comprise making the reward available to the executor device.

This way, trading of tokenized assets without relying on a trusted central authority is enabled. Additionally, by utilizing a decentralized order book execution model, "real price discovery" is enabled and facilitated. "Real price discovery" refers to the concept of a traditional trading, where both parties have to find a consensus of what the price for the tokenized asset should be. In common approaches, such a "price discovery" is not possible. Instead, the only way to move the price is to perform the trade itself. As a result, the decentralized order book provides a novel mechanism of trading tokenized assets in a way similar to traditional centralized exchanges but without the need for a trusted central authority.

Furthermore, contrary to common approaches, the present blockchain technique provides shared execution cost semantics as well as partial execution semantics. This makes the common approach more efficient and scalable for decentralized applications compared to common approaches for codebook implementation which do not only rely on a central authority but are also limited by the fact of unpredictable and potentially unbounded fees (i.e., execution costs) during the order execution. This risk is overcome by enabling a user to add, modify or cancel his/her token trading orders while an executor is able to select which trading order(s) he/she is willing to execute. As a result, a composable job comprising a plurality of token trading orders as well as the computing costs associated with the composable job and the plurality of token trading orders respectively may be split between different executor devices. The fact that the user device has in-advance deposited the reward for each corresponding token trading order, eliminates the uncertainty for the executor with respect to the unpredictable/unbounded fees.

The "set of smart contracts" as referred to herein may be Ethereum smart contracts. The concepts disclosed herein may also be extended to other blockchains like Tezos or the like.

"Payment of a reward" as referred to herein may be understood as a reward allocation for a future execution of the corresponding token trading order by an executor device. This means that different from common approaches in which the entire costs for the execution is paid by the caller (i.e., the executor), the present disclosure provides a way of collecting the cost/fee in advance. This also brings the advantage of being able to split a composable task (e.g., an entire transaction for a token trade) into a plurality of token trading orders, collect for each token trading order of the plurality of token trading orders a corresponding reward and make each token trading order of the plurality of token trading orders available for execution by one or more (different) executor devices. The reward allocation (i.e., the payment of the reward) may dynamically change. For example, if an additional token trading order is added to the decentralized order book, an additional reward may be collected resulting in an increase of the overall reward allocation. For example, if an already added token trading order is removed from the decentralized order book, the paid reward is returned resulting in a decrease of the overall reward allocation.

According to another aspect of the present disclosure, the method may further comprise determining that the user device is associated with a negative balance. The method may further comprise blocking the user device from the blockchain until the negative balance is resolved.

According to another aspect of the present disclosure, blocking the user device from the blockchain may comprises denying the user device to add another token trading order to the decentralized order book and/or making the token trading order unavailable for execution.

By blocking the user device until the negative balance is resolved (e.g., by depositing the outstanding rewards), it is avoided that a user device adds further token trading orders. Furthermore, making the already added trading order unavailable for execution avoids a situation in which an executor device executes the trading order but is not able to collect its reward for the execution. In summary, trustlessness within the blockchain system is ensured by blocking the user device until the negative balance is resolved.

According to another aspect of the present disclosure, the method may further comprise receiving, from the user device, a request to cancel the token trading order. The method may further comprise deleting the token trading order from the decentralized order book. The method may further comprise returning the paid reward to the user device.

By allowing a user device to cancel an added token trading order, the user device is enabled to collect its previously paid reward. This might be necessary if no other party (e.g., an executor device) is willing to execute the token trading order for the given reward (e.g., because the reward is too small). Instead of cancelling the token trading order, the user device may also be able to modify the token trading order (e.g., increase or decrease the reward).

Another aspect of the preset disclosure relates to a method for trading tokenized assets. The method may be performed by a user device. The method may be computer-implemented. The method may comprise sending a request to add a token trading order to a decentralized order book configured to record token trading orders. The decentralized order book may be formed by a set of smart contracts stored on a blockchain. The method may comprise receiving a response including a request for payment of a reward for executing the token trading order. The method may comprise performing the payment of the reward by depositing the reward in the decentralized order book.

The advantages that were mentioned with regards to any one of the previous aspects apply likewise. Further advantages may be applicable.

According to another aspect of the present disclosure, the method may further comprise transmitting a request to cancel the token trading order. The method may further comprise getting, in response to the request, the paid reward back.

The advantages that were mentioned with regards to any one of the previous aspects apply likewise. Further advantages may be applicable.

Another aspect of the present disclosure relates to a method for trading tokenized assets. The method may be performed by an executor device. The method may be computer-implemented. The method may comprise selecting a token trading order available for execution. The token trading order may be recoded in a decentralized order book. The decentralized order book may be formed by a set of smart contracts stored on a blockchain. The method may comprise executing the token trading order. The method may comprise collecting a reward for executing the token trading order.

The advantages that were mentioned with regards to any one of the previous aspects apply likewise. Further advantages may be applicable.

According to another aspect of the present disclosure, the token trading order may be part of a composable task comprising a plurality of token trading orders.

This way, a task may be split up into a plurality of token trading orders. As a result, an executor device no longer has to execute the entire task but may instead only execute a part of the task (i.e., one or more token trading orders of the plurality of token trading orders of which the task is composed of). It is to be understood that in case the composable task comprises only one token trading order, the corresponding token trading order is representative of the corresponding composable task (i.e., the token trading order represents the entire task).

According to another aspect of the present disclosure, each token trading order may be associated with a computing complexity.

According to another aspect of the present disclosure, the computing complexity of different token trading orders of the plurality of token trading orders may based on the memory, storage and/or computational resources required for processing the respective token trading order. For different token trading orders, the associated computing complexity may be different or the same.

According to another aspect of the present disclosure, the reward for executing the token trading order may be based on the computing complexity. The reward for executing the token may be larger than costs associated with processing the token trading order.

As the composable task may be split up into a plurality of token trading orders of different complexity, finding consensus between the user device and an executor device is simplified. For example, a task may be composed of a first and a second token trading order. The first token trading order may be associated with a low computing complexity resulting in a low reward for executing the first token trading order, while the second token trading order may be associated with a higher computing complexity resulting in a higher reward for executing the second token trading order. If an executor device lacks the computational resources for executing the entire composable task, the user device may instead add the first and the second token trading orders to the decentralized order book. As a result, the executor device is then able to select one of the token trading orders for which it has sufficient computing resources (e.g., the first token trading order), execute the selected token trading order and collect its reward. Afterwards, the executor device may continue with another token trading order (e.g., the second token trading order). Alternatively, another executor device having a higher computational capability may execute the second token trading order. This way, a decentralized, partial execution mechanism is provided.

According to another aspect of the present disclosure, the plurality of token trading orders may comprise the token trading order and at least one other token trading order. In this aspect, the method may further comprise determining a reward for the at least one other token trading order. In this aspect, the method may further comprise collecting a payment for the at least one other token trading order from the user device. In this aspect, the method may further comprise making the at least one other token trading order available for execution. In this aspect, the method may further comprise determining that the other token trading order was executed by the executor device or another executor device. In this aspect, the method may further comprise making the reward available for the executor device or the other executor device.

As explained above, a task may be split into a plurality of token trading orders. A user device may add each of these token trading orders into the decentralized order book, pay the corresponding reward and may this way cause the corresponding token trading order being made available for execution by an executor device. If the user device has added a plurality of token trading orders, each of the token trading orders may be executed by a different executor device. As a result, when the corresponding executor device, which may be the same executor device already having executed the previous token trading order but also another/different executor device, has executed the other/newly added token trading order, the reward is made available for collecting by the corresponding executor device.

Another aspect of the present disclosure relates to a data-structure, preferably a heap data structure, for a decentralized order book configured to record trading orders. The data structure may comprise a set of smart contracts stored on a blockchain. The data structure may be configured to perform and/or to be used in the method of any one of the aspects described herein.

The advantages that were mentioned with regards to any one of the previous aspects apply likewise. Further advantages may be applicable.

The method(s) and/or data-structure of the present disclosure may be applied to a wide range of applications which require a scalable implementation for trading tokenized assets including decentralized finance services.

Another aspect of the present disclosure relates to a data processing apparatus comprising means for carrying out the method of any one of the aspects described herein.

The advantages that were mentioned with regards to any one of the previous aspects apply likewise. Further advantages may be applicable.

Another aspect of the present disclosure relates to a computer program or a computer-readable medium having stored thereon the computer program, the computer program comprising instructions which, when the computer program is executed by a data processing apparatus, cause the data processing apparatus to carry out the method of any one of the aspects described herein.

The advantages that were mentioned with regards to any one of the previous aspects apply likewise. Further advantages may be applicable.

### BRIEF DESCRIPTION OF THE DRAWINGS

The disclosure may be better understood by reference to the following drawings:
- Fig. 1:: A system overview for trading tokenized assets in accordance with embodiments of the present disclosure.
- Fig. 2a:: A system overview for trading tokenized assets at a user device in accordance with embodiments of the present disclosure.
- Fig. 2b:: A system overview for trading tokenized assets at a user device in accordance with embodiments of the present disclosure.
- Fig. 3:: A system overview for trading tokenized assets at an executor device in accordance with embodiments of the present disclosure.
- Fig. 4:: A flowchart of a method for for trading tokenized assets in accordance with embodiments of the present disclosure.
- Fig. 5:: A flowchart of a method for for trading tokenized assets performed by a user device in accordance with embodiments of the present disclosure.
- Fig. 6:: A flowchart of a method for for trading tokenized assets performed by an executor device in accordance with embodiments of the present disclosure.
- Fig. 7:: An apparatus or system for trading tokenized assets in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

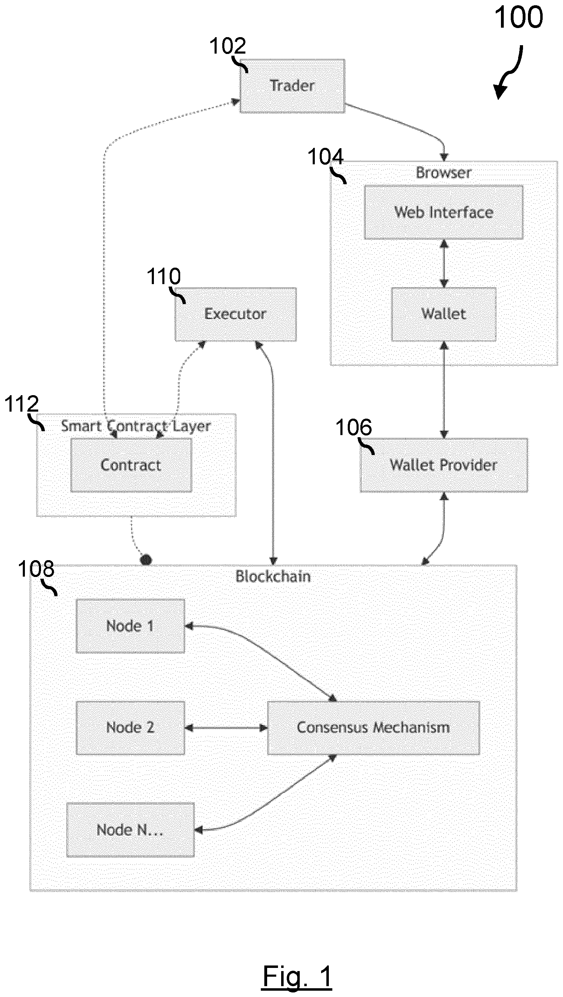

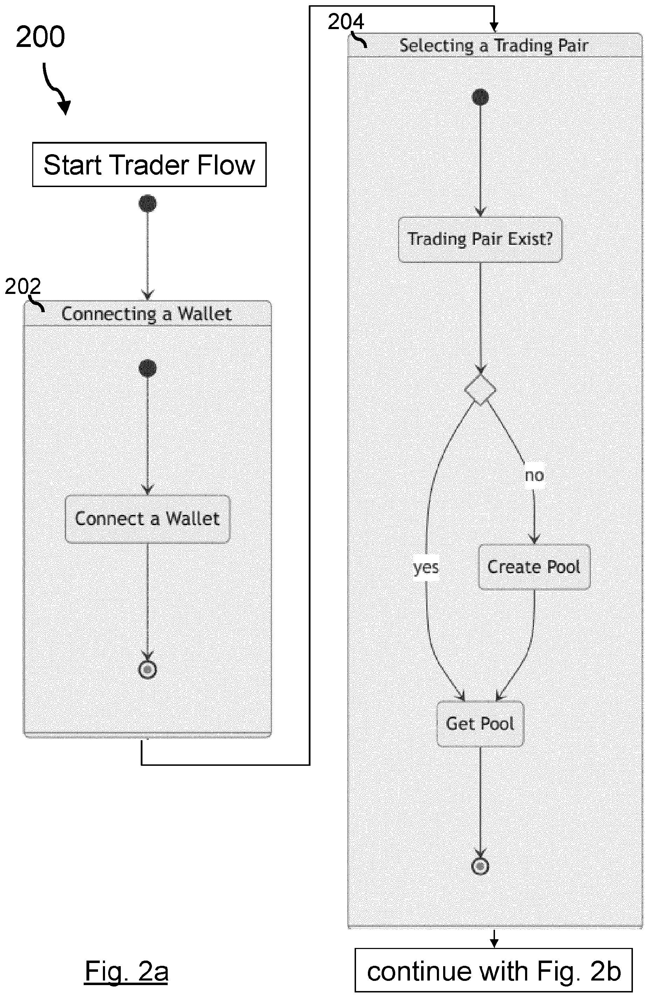

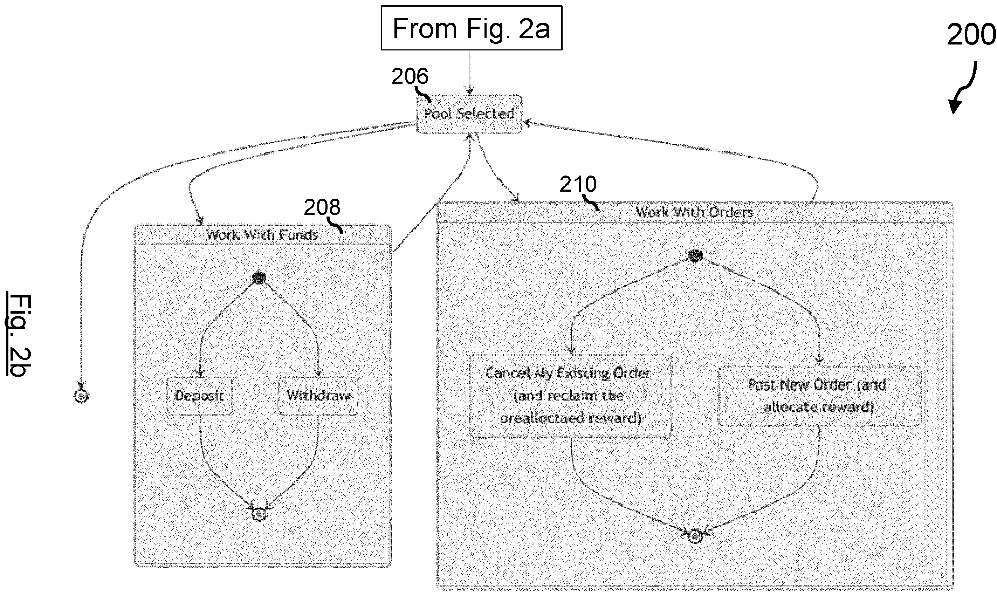

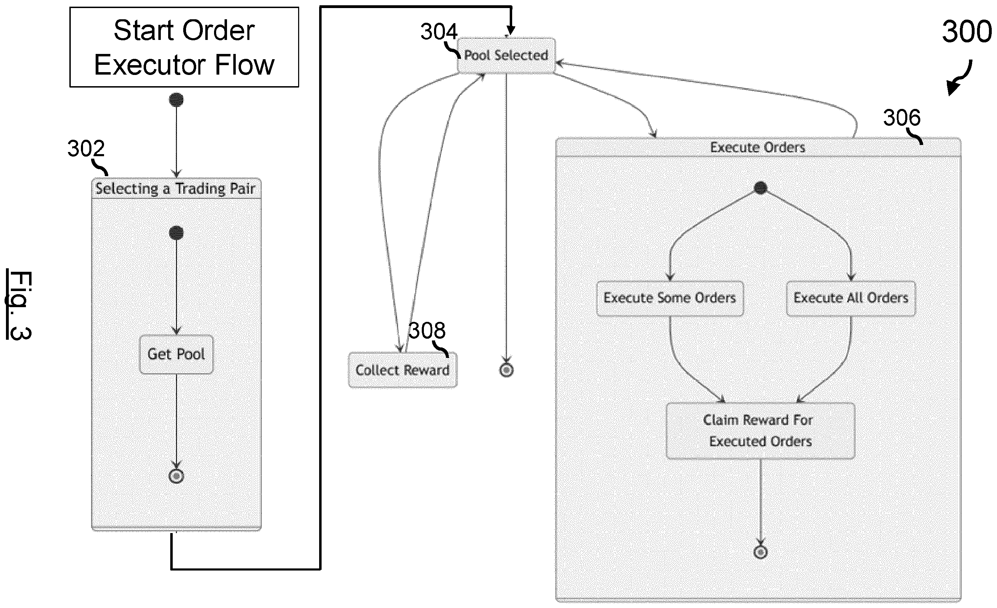

Fig. 1 illustrates a system 100 for trading tokenized assets in accordance with certain embodiments of the present disclosure. The system 100 comprises a trader 102 (e.g., a user device), an executor 110 (e.g., an executor device) and optionally a wallet provider 106. The system 100 further comprises a blockchain 108 which comprises a smart contract layer 112. In other words, a set of smart contracts is stored on the blockchain 108. The blockchain 108 comprises a plurality of nodes (Node 1, Node 2, ..., Node N). Each node represents a data-processing apparatus connected to the blockchain. Each node is configured to perform various blockchain-related functions such as maintenance, validation and/or propagation of the blockchain's ledger. For this purpose, the blockchain implements a consensus mechanism. The consensus mechanism is the process used by the blockchain nodes to agree on the validity of transactions and to ensure that all nodes have a consistent copy of the blockchain ledger. The set of smart contracts stored on the blockchain 108 form a decentralized order book configured to record token trading orders as explained above. In order to add a token trading order to the decentralized order book, the trader 102 accesses his/her browser of his/her user device, connects to his/her wallet via a corresponding web interface and performs a trader flow as explained in Figs. 2a and 2b. The wallet may be provided by the corresponding wallet provider 106. In order to select a token trading order available for execution, the executor 110 performs an executor flow as explained with respect to Fig. 3.

Fig. 2a illustrates a system 200 for trading tokenized assets at a user device 102 in accordance with certain embodiments of the present disclosure. In this regard, Fig. 2a explains a first part of a trader flow as mentioned above with respect to Fig. 1. In order to start the trader flow, a trader connects a wallet 202 and opens an exchange user interface for trading tokenized assets (e.g., by opening a web browser or app and clicking on a corresponding link to get to a screen to deposit or withdraw assets). After the trader has connected the wallet, the trader has to select a trading pair. A trading pair refers to the exchange of an amount of a first tokenized asset for an amount of a second tokenized asset. The first and the second tokenized asset may be of same or different kind. In case the trading pair the trader is looking for does not already exist, the trader can create a corresponding trading pool contract. To create the trading pool contract, the trader may input the amount of token(s) to be exchanged. Said creation may be implemented as an on-chain smart contract operation to which only the trader has access. Accordingly, the trader may also withdraw the inputted token(s). A trading or liquidity pool relates to a smart contract-based reserve of tokenized assets that facilitates the trading of these assets on decentralized exchanges (DEXs). In case the trading pair already exist, the trader may simply select the corresponding trading pool. Once the trading pool is selected 206, the trader flow continues with Fig. 2b.

Fig. 2b illustrates a system 200 for trading tokenized assets at a user device 102 in accordance with certain embodiments of the present disclosure. Fig. 2b illustrates the second part of the trader flow as explained with respect to Fig. 2a. As explained with respect to Fig. 2a, the trader selects a corresponding trading pool. Once the trading pool is selected 206, the trader may decide to work with funds 208 or to work with orders 210.

In case the trader decides to proceed with funds 208, the trader may either deposit or withdraw.

In case the trader decides to work with orders, the trader may either post a new token trading order to the decentralized order book or cancel an existing token trading order. The trading order may comprise an exchange of a first amount of a first tokenized asset for a second amount of a second tokenized asset. Once added, the assets together with the corresponding reward may be allocated and locked. The locked assets/reward may only be released if the trader cancels the token trading order or if the token trading order is executed by an executor device. If executed, the trader may receive the result of the executed token trading order(s) via the wallet interface. For example, the desired second amount of the second tokenized asset may appear on the trader's wallet balance. The trader may receive a corresponding notification about the executed token trading order.

In order to post a new token trading order, the trader may send via a user device a request to add the token trading order to the decentralized order book. After receiving a corresponding response including a request for payment of a reward for executing the token trading order, the trader may allocate the reward by paying the reward (i.e., depositing the reward in the decentralized order book). By depositing the reward in-advance, uncertainty regarding execution costs is avoided for an executor device executing the token trading order (see Fig. 3). In order to cancel an existing token trading order, the trader may transmit via the user device a request to cancel the token trading order. In this case, the trader will get the paid reward back. The trader may receive the result of the cancellation via the wallet interface as explained above with respect to the successful execution of a token trading order.

Fig. 3 illustrates a system 300 for trading tokenized assets at an executor device 110 in accordance with certain embodiments of the present disclosure. At first, the executor selects 302 a token trading pair via its executor device. In this regard, the executor may select a corresponding trading pool. Once the pool is selected 304, the executor device may continue with the execution 306 of token trading orders of the selected pool. In this regard, the executor device may decide to execute all token trading orders (i.e., an entire composable task) or only some token trading orders (i.e., a partial execution of a composable task). Once the token trading order(s) has/have been executed, the executor device may claim/collect the corresponding reward.

Alternatively, the executor device may collect 308 a reward.

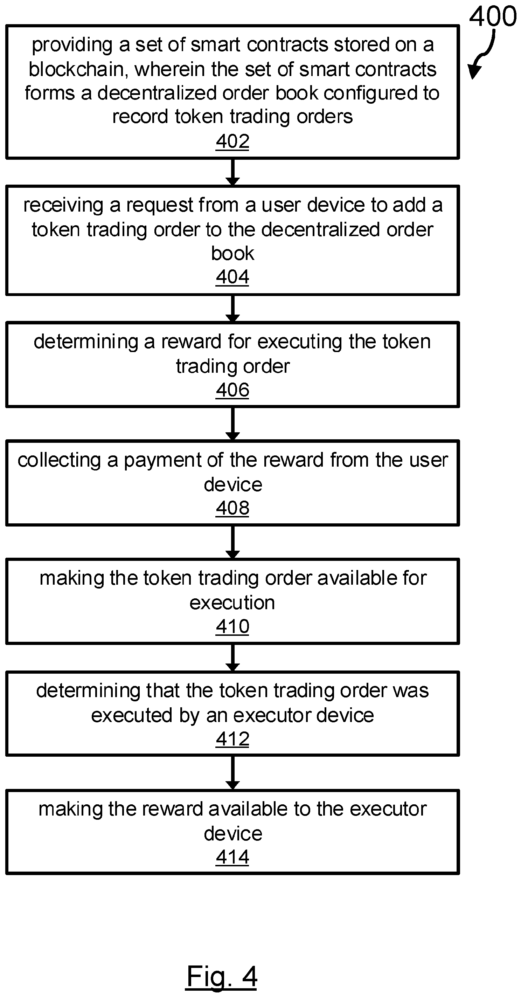

Fig. 4 illustrates a flowchart of a method 400 for for trading tokenized assets in accordance with certain embodiments of the present disclosure.

The method 400 may comprise providing a set of smart contracts (step 402). The set of smart contracts may be stored on a blockchain. The set of smart contracts may form a decentralized order book configured to record token trading orders. The method 400 may comprise receiving a request from a user device to add a token trading order to the decentralized order book (step 404). The method 400 may comprise determining a reward for executing the token trading order (step 406). The method 400 may comprise collecting a payment of the reward from the user device (408). The method 400 may comprise making the token trading order available for execution (step 410). The method 400 may comprise determining that the token trading order was executed by an executor device (step 412). The method 400 may comprise making the reward available to the executor device (step 414). The method 400 may further comprise any aspects as described herein.

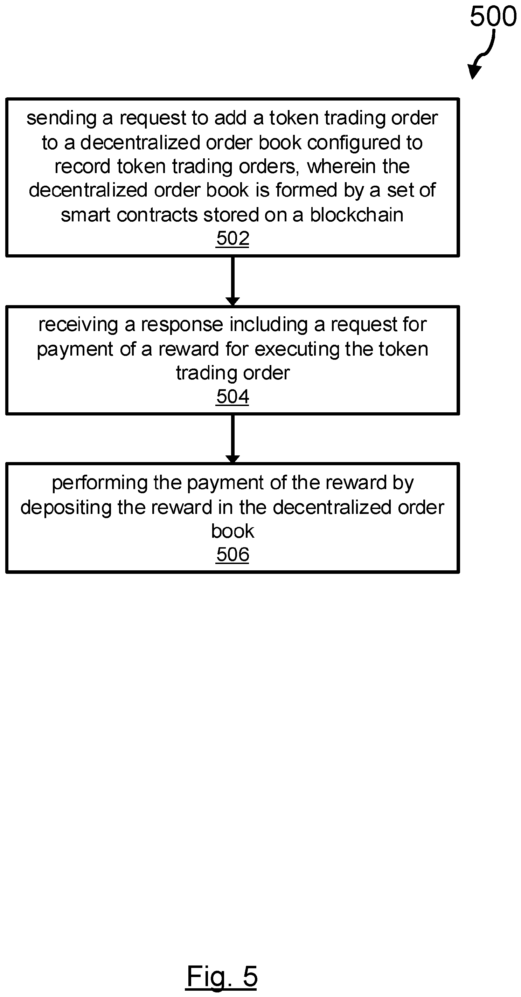

Fig. 5 illustrates a flowchart of a method 500 for trading tokenized assets in accordance with certain embodiments of the present disclosure. The method 500 may be performed by a user device.

The method 500 may comprise sending a request to add a token trading order to a decentralized order book configured to record token trading orders (step 502). The decentralized order book may be formed by a set of smart contracts stored on a blockchain. The method 500 may comprise receiving a response including a request for payment of a reward for executing the token trading order (step 504). The method 500 may comprise performing the payment of the reward by depositing the reward in the decentralized order book (step 506). The method 500 may further comprise any aspects as described herein.

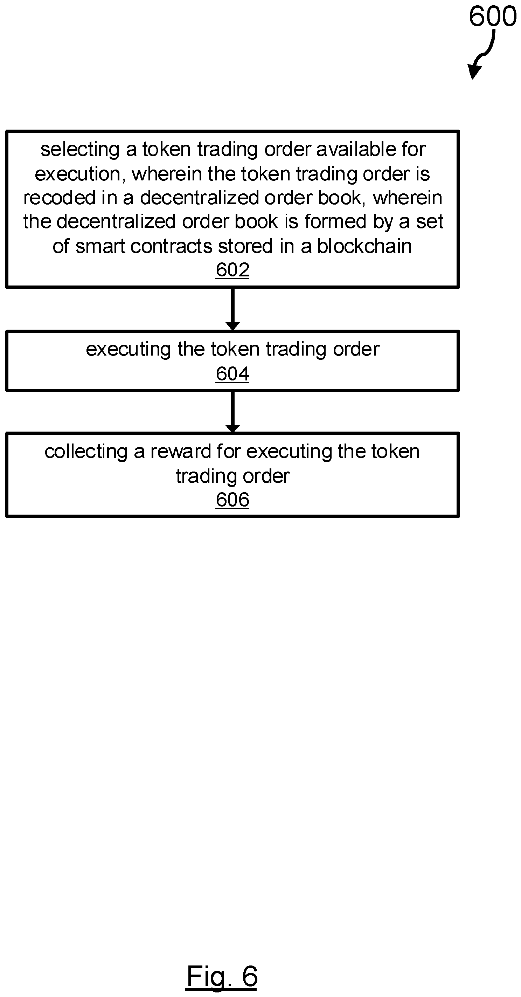

Fig. 6 illustrates a flowchart of a method 600 for for trading tokenized assets in accordance with certain embodiments of the present disclosure. The method may be performed by an executor device.

The method 600 may comprise selecting a token trading order available for execution (step 602). The token trading order may be recoded in a decentralized order book. The decentralized order book may be formed by a set of smart contracts stored on a blockchain. The method 600 may comprise executing the token trading order (step 604). The method 600 may comprise collecting a reward for executing the token trading order (step 606). The method 600 may further comprise any aspects as described herein.

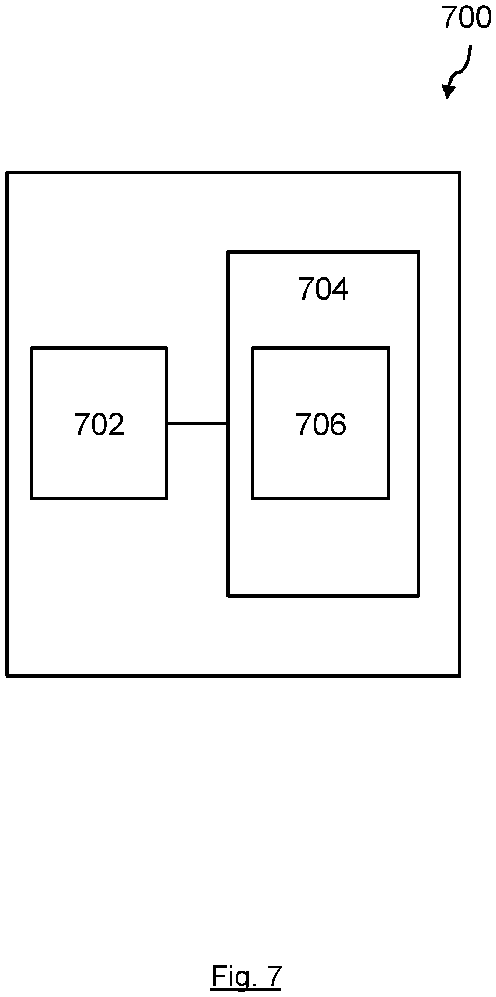

Fig. 7 illustrates an apparatus 700 or system for trading tokenized assets in accordance with certain embodiments of the present disclosure.

The data processing apparatus 700 may comprise means for performing the method(s) according to the present disclosure (e.g., the method 400 and/or the method 500 and/or the method 600). In other words, the data processing apparatus may be a part/component of the user device or executor device respectively. Alternatively, the data processing apparatus may be the user device or the executor device. The means may comprise a processor 702 and a memory 704. The processor 702 and the memory 704 may be operatively connected. The memory 704 may store a computer program 706, wherein the computer program 706 comprises instructions that, when the computer program 706 is executed by a computer (e.g., the processor 702), cause the computer to execute the method(s) according to any of the aforementioned aspects (e.g., the method 400 and/or the method 500 and/or the method 600).

As explained throughout this disclosure, certain embodiments may provide a decentralized token exchange platform, for example implemented as a set of smart contracts (e.g., Ethereum smart contracts), that enables the trading of tokenized assets without relying on a trusted central authority and uses an order book execution model to facilitate real price discovery. In other words, a decentralized and trustless exchange platform for tokenized assets is provided in certain embodiments.

Certain embodiments disclosed herein are configured to support the following semantics, enabling complex real-life use cases:
1. A user adds/modifies/cancels job details and commits to share the actual cost of the eventual job execution. Note that the user balance can get negative. If so, all the user activity is blocked on the blockchain until the balance issue is resolved (by transferring funds as necessary).
2. An executor performs the job (partially or fully), the gas payment fee comes from the user committed to this at step 1, whose job was addressed at this stage. The executor can also get some incentive or reward at this stage to execute the job.

To achieve this semantics on a blockchain, especially an EVM-like blockchain, the above flow is modified in certain embodiments:
1. A user explicitly adds a pending reward allocation for a future job execution. This reward allocation dynamically changes depending on the nature of the job. This reward allocation can even be completely withdrawn back if the user's part of the job is cancelled or unnecessary.
2. An executor executes the job partially or fully. An executor pays the full gas fee required for executing the method (i.e., the executor should have these funds available). After that, an executor can claim the reward allocated at the step 1 for the part of the job executed. This reward should be higher than the gas fee spent by the executor. It should be ensured by the design of the contract. The difference between the reward and the actual transaction gas fee constitutes the incentive for the executor to perform this method.

Eventually, the extracted reward may become a Miner Extracted Value optimization, so that miners will be responsible for executing most of these methods in a timely manner.

The following is a concrete exemplary end-to-end walkthrough according to certain embodiments:
- A user connects a wallet.
- The user opens the exchange user interface for the selected trading pair in a browser or on a mobile platform.
- The user clicks on a link to get to the screen to deposit or withdraw assets.
- The user types in an amount of asset A, asset B and reward (e.g., in ETH) to be transferred into the trading pool contract.
- The user sees the asset A, asset B and ETH belongings assigned to the trading pool.
- The user withdraws assets from the trading pool.
- The user posts an order to exchange A to B or B to A. The assets are allocated and locked. The pool-configured reward (in ETH) is allocated as well.
- The user sees its own orders.
- The user cancels a previously made order. The locked assets as well as pre-allocated reward are released and available for the future orders or for withdrawal.
- (No UX / UI) An Executor executes intersected bid-ask orders, by initiating a method on the blockchain. As a result, the relevant part of the pre-allocated reward is transferred to the executor's pool's balance.
- The user can see the result of the executed orders. The desired amount of token A or B will appear on its balance. The user gets a notification about the order execution.
- (No UX / UI) The Executor collects the reward allocated.

In certain embodiments, the order book is implemented using a heap structure. This allows for efficient insertion and removal of orders, with a sub-linear complexity of O(log N), where N is the number of orders in the book. This is acceptable for the make/cancel order operations, as the complexity can be considered bounded, i.e., less than some constant value for all the real word use cases (due to the slow growth of the log N function).

However, the order execution method's complexity is in certain embodiments O(K log N), where K is the number of executed orders, which violates the assumptions of constant and bounded transaction costs. To resolve this, certain embodiments introduce one or more of the following adjustments:
1. Partial execution: the order execution method is modified to allow for partial execution, where only a subset of the orders that can be executed are actually executed. This reduces the complexity of the method and allows for more efficient use of computational resources.
2. In-advance fee collection: a mechanism is introduced to collect fees in advance from participants who place orders. This fee is constant for order makers. The collected fee is used as a reward to reimburse the caller who executes the orders. This reward is proportional to the number of orders executed. The allocated fee will be returned to the original order maker in the case the order is cancelled.
3. Reimbursement: a mechanism is introduced to reimburse the caller for the execution of the orders. This reimbursement is proportional to the number of orders executed and is used to incentivize the caller to execute the orders.

As used herein the term "and/or" includes any and all combinations of one or more of the associated listed items and may be abbreviated as *"*/*".*

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented method (400) for trading tokenized assets, comprising:
providing (402) a set of smart contracts (112) stored on a blockchain (108), wherein the set of smart contracts forms a decentralized order book configured to record token trading orders;
receiving (404) a request from a user device (102) to add a token trading order to the decentralized order book;
determining (406) a reward for executing the token trading order;
collecting (408) a payment of the reward from the user device (102);
making (410) the token trading order available for execution;
determining (412) that the token trading order was executed by an executor device (110); and
making (414) the reward available to the executor device (110).

2. The method of the preceding claim, further comprising:
determining that the user device is associated with a negative balance; and
blocking the user device from the blockchain until the negative balance is resolved.

3. The method of the preceding claim wherein blocking the user device from the blockchain comprises:
denying the user device to add another token trading order to the decentralized order book; and/or
making the token trading order unavailable for execution.

4. The method of any one of the preceding claims, further comprising:
receiving, from the user device, a request to cancel the token trading order;
deleting the token trading order from the decentralized order book; and
returning the paid reward to the user device.

5. A computer-implemented (500) method for trading tokenized assets, wherein the method is performed by a user device (102), comprising:
sending (502) a request to add a token trading order to a decentralized order book configured to record token trading orders, wherein the decentralized order book is formed by a set of smart contracts (112) stored on a blockchain (108);
receiving (504) a response including a request for payment of a reward for executing the token trading order; and
performing (506) the payment of the reward by depositing the reward in the decentralized order book.

6. The method of the preceding claim, further comprising:
transmitting a request to cancel the token trading order; and
getting, in response to the request, the paid reward back.

7. A computer implemented method (600) for trading tokenized assets, wherein the method is performed by an executor device (110), comprising:
selecting (602) a token trading order available for execution, wherein the token trading order is recoded in a decentralized order book, wherein the decentralized order book is formed by a set of smart contracts (112) stored on a blockchain (108);
executing (604) the token trading order; and
collecting (606) a reward for executing the token trading order.

8. The method of any one of the preceding claims, wherein the token trading order is part of a composable task comprising a plurality of token trading orders.

9. The method of the preceding claim, wherein each token trading order is associated with a computing complexity.

10. The method of the preceding claim, wherein the computing complexity of different token trading orders of the plurality of token trading orders is based on the memory, storage and/or computational resources required for processing the respective token trading order.

11. The method of any one of claims 9-10, wherein the reward for executing the token trading order is based on the computing complexity;
preferably, wherein the reward for executing the token is larger than costs associated with processing the token trading order.

12. The method of any one of claims 8-11 when depending on any one of claims 1-4, wherein the plurality of token trading orders comprises the token trading order and at least one other token trading order; and
wherein the method further comprises:
determining a reward for the at least one other token trading order;
collecting a payment for the at least one other token trading order from the user device;
making the at least one other token trading order available for execution;
determining that the other token trading order was executed by the executor device or another executor device; and
making the reward available for the executor device or the other executor device.

13. A data-structure, preferably a heap data structure, for a decentralized order book configured to record trading orders, wherein the data structure comprises a set of smart contracts (112) stored on a blockchain (108), and wherein the data structure is configured to perform and/or to be used in the method of any one of the preceding claims.

14. A data processing apparatus (700) comprising means for carrying out the method (400, 500, 600) of any one of claims 1-12.

15. A computer program (706) or a computer-readable medium having stored thereon the computer program (706), the computer program (706) comprising instructions which, when the computer program is executed by a data processing apparatus (700), cause the data processing apparatus (700) to carry out the method (400, 500, 600) of any one of claims 1-12.
